# EUROPEAN PATENT APPLICATION

(11) **EP 0 741 107 A2**
(43) Date of publication of application: **06.11.1996**
(21) Application number: 96600002.8
(22) Date of filing: 21.02.1996
(51) Int. Cl.: C01B 3/38, C01B 3/40, B01J 23/46, B01J 23/83

(54) **Catalysts for the partial oxidation of light hydrocarbons to synthesis gas**

(30) Priority: 03.05.1995 GR 95100173
(71) Applicant: Foundation for Research and Technology Hellas, (Institute of Chemical Engineering and High Temperature Chemical Processes), 711 10 Iraklio, Crete (GR); Verykios, Xenophon, 26500 Ahaia (GR); Boucouvalas, Yiannis, 26500 Ahaia (GR); Zhang, Zhaolong, 26500 Ahaia (GR)
(72) Inventor: Verykios, Xenophon, Panepistimioupoli, Rion 26500 Ahaia (GR); Boucouvalas, Yiannis, Panepistimioupoli, Rion 26500 Ahaia (GR); Zhang, Zhaolong, Panepistimioupoli, Rion 26500 Ahaia (GR)
(74) Representative: Koutifari, Ekaterini Georgiou

(57) **Abstract**

Two catalysts are revealed for the process of partial oxidation of light hydrocarbons to synthesis gas: a) Novel nickel-based catalysts for catalytic partial oxidation of light hydrocarbons, preferably natural gas, to synthesis gas (CO+H₂) consist of nickel crystallites in contact with La₂O₃, either in the form of nickel supported on La₂O₃ carrier or in the form of nickel on La₂O₃ particles dispersed on a conventional carrier such as Al₂O₃. The nickel content of the catalyst can be in the range of 1-80 wt%, preferably 5-40 wt%. In contrast to conventional nickel-based catalysts, e.g. Ni/γ-Al₂O₃, which show a continuous deactivation due to coke formation, the novel Ni/La₂O₃ catalysts exhibit high conversion and selectivity and excellent stability towards partial oxidation of light hydrocarbons to synthesis gas at reaction temperatures higher than 500^{o}C, even when using feed of lower O/C ratios (O=O₂, H₂O or CO₂; C=light hydrocarbons, preferably CH₄), thus permitting the process to be more cost-efficient. b) Ruthenium-based catalysts, consisting of 0.01∼40 wt.%, preferably 0.1-10 wt.%, Ru on a carrier of TiO₂ optionally doped with an oxide, e.g. ZnO. The catalysts are capable of converting up to 60-70% of methane in the feed stream (if using a feed of O₂/CH₄=0.5) with selectivity to synthesis gas of 60∼80% and at oxygen conversion of 90-99%, via the direct partial oxidation scheme (i.e. without or with negligible involvement of reforming steps). The remaining of unconverted methane can be further converted to synthesis gas over the Ru/TiO₂ or Ni/La₂O₃ or other reforming catalyst, by subsequent reforming with CO₂ and H₂O or by feeding more oxygen into the catalyst bed, via e.g. multi-feeding manner.

## Description

### Background of the invention

During the last decade considerable efforts have been devoted to the conversion of methane, the major component of natural gas, into easily transportable and/or value added products [1-2]. One of the most important means is the conversion of methane into petrochemicals and liquid hydrocarbon fuels by synthesis gas conversion routes. At present, a large fraction of synthesis gas is produced from natural gas due to the abundance and low cost of the latter. Two methods for producing synthesis gas from natural gas are employed: (a) The steam reforming process, which has been extensively used in industry. The heat required in stream reforming is supplied by external heating of the tubular reactors by combustion of methane, thus making the production unit mechanically complex and environmentally harmful since undesired emissions (CO₂, NOₓ and SOₓ) are produced and released into the atmosphere [3,4]. (b) Non-catalytic partial oxidation of natural gas, followed by catalytic reforming reactions to synthesis gas (called autothermal reforming process) [5,6]. In this process, oxygen is fed along with steam and/or CO₂ into the internal combustion chamber to provide the required heat, by partial combustion of natural gas. Since the flame has a very high temperature, often above 2000^{o}C, severe problems associated with soot formation and damage of burner materials develop. The catalyst bed is exposed to high temperatures (1100-1400^{o}C) as the gas leaves the combustion chamber, resulting in catalyst sintering.

Catalytic partial oxidation of natural gas to synthesis gas, which is still under development, combines the exothermic oxidation reaction(s) and endothermic reforming reactions within a single process train. It allows conversion of methane to synthesis gas to be completed within a simple catalytic reactor without need of externally fired heaters or a separate internal combustion chamber. Numerous supported metal catalysts have been tested for catalytic partial oxidation of methane. Ni-based catalysts [7, 8], as well as supported noble metal catalysts [9-12] have been found to exhibit promising catalytic performance in terms of methane conversion and selectivity to synthesis gas. The major problems encountered towards application of this process are (1) deactivation of catalyst, mainly by carbon deposition, and (2) large temperature change along the catalyst bed which is undesirable for the adiabatic operation, and which imposes risks of catalyst sintering, explosion, and wearing of the reactor materials.

The catalysts based on noble metals are reported to be generally more active and less sensitive to coking than the Ni-based catalysts [7-12]. Among noble metal catalysts, Rh has been reported by several research groups to exhibit high activity and selectivity, as well as good long-term stability [9,10]. However, considering the aspects of high cost and unavailability of Rh metal, it is more practical, from the industrial point of view, to develop improved nickel-based catalysts and/or noble metal-based catalysts other than Rh (e.g. Pd, Pt, and Ru) which are resistant to carbon deposition, exhibiting stable operation for a long period of time. Green and co-workers [11] investigated the partial oxidation of methane over mixed metal oxides of ruthenium (Ln₂RuO₇, Ln=lanthanide). They reported that a very high yield (>90%) to synthesis gas with a good stability can be obtained at reaction temperatures higher than 750^{o}C. Lunsford and his-coworkers [8] studied the partial oxidation of methane in the temperature range of 450-900^{o}C over a 25 wt.% Ni/Al₂O₃ catalyst. They observed that CO selectivity approaching 95% and virtually complete conversion of methane can be achieved at temperatures higher than 700^{o}C. The stable performance was not obtained unless an amount of oxygen larger than the stoichiometric requirement (O₂/CH₄ >0.5) was supplied. A number of studies, using monolith-supported metals as the catalysts for partial oxidation of methane to synthesis gas, have been done by Schmidt and his coworkers [9, 13, 14]. It has been found that Rh exhibits the best performance in terms of activity/selectivity and stability. Ni catalyst shows similar conversion and selectivity, but deactivates with time on stream. The other noble metals (Pt, Pd, Re, Ru) and Co catalysts generally exhibit a performance which is inferior to that of Rh and Ni catalysts.

Concerning the reaction pathway of partial oxidation of methane to synthesis gas, two mechanistic schemes have been proposed: one is the sequence of total oxidation of methane to CO₂ and H₂O, followed by reforming of the unconverted methane with the CO₂ and H₂O which are formed primarily (designated as indirect scheme); the other is the direct partial oxidation of methane to synthesis gas without the experience of CO₂ and H₂O as reaction intermediates. The majority of previous studies over numerous types of catalysts show that the partial oxidation of methane follows the indirect reaction scheme. This is supported by the observation that a sharp temperature spike occurs at the beginning of the catalyst bed which is attributed to the highly exothermic methane combustion [7,8] and that essentially zero CO selectivity is obtained at low methane conversions (<25%) where oxygen is not fully consumed [10]. From the theoretical point of view, the direct partial oxidation to synthesis gas is thermodynamically permissible and is of high industrial interest since the problems associated with catalyst deactivation and large changes in the temperature profile along the catalyst bed could be largely eliminated if a catalyst catalyzing the direct partial oxidation of methane to synthesis gas is developed. However, this demands that the catalyst meets several stringent requirements in order to be able to effectively retard the deep oxidation of CO and H₂ which are thermodynamically more favored.

### Brief description of the drawings

**Figure 1.** Alteration of methane conversion with time on stream under conditions of partial oxidation of methane, over Ni/γ-Al₂O₃, Ni/CaO (10 mol.%)/γ-Al₂O₃, Ni/CaO catalysts. Reaction conditions: T=750^{o}C, metal loading=17 wt.%, CH₄/O₂/He = 4/2/94 vol.%.

**Figure 2.** Alteration of methane conversion and CO selectivity as a function of time on stream, obtained over a 17 wt.% Ni/La₂O₃ catalyst at 800^{o}C using a feed of CH₄/O₂/He = 4/2/94 vol.%.

**Figure 3.** Alteration of methane conversion and CO selectivity with time on stream, obtained over a 17 wt.% Ni/La₂O₃ catalyst at 800^{o}C using CH₄/O₂ = 67/33 vol.%, Pₜₒₜ=1.0 bar.

**Figure 4.** Variation of CO selectivity as a function of methane conversion over various supported Ru catalysts. Ru metal loading is invariably 0.5 wt.%, CH₄/O₂/He = 4/2/94 vol.%.

**Figure 5.** Variation of H₂ selectivity as a function of methane conversion over Ru/TiO₂ and Ru/γ-Al₂O₃ catalysts. Ru metal loading is invariably 0.5 wt.%, T=550∼750^{o}C, CH₄/O₂/He = 4/2/94 vol.%.

**Figure 6.** CO selectivity as a function of methane conversion obtained over Ru/TiO₂ (rutile), Ru/TiO₂ (0.11 at.% WO₃), and Ru/TiO₂ (0.11 at.% ZnO) catalysts. Ru loading is invariably 0.5 wt.%. T=750^{o}C, CH₄/O₂/He = 4/2/96 vol.%.

**Figure 7.** Alteration of methane conversion and selectivity to synthesis gas, as a function of time on stream operating at 800^{o}C, CH₄/O₂ = 2, 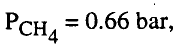 Pₜₒₜ = 1.0 bar. The contact time is adjusted in order that the oxygen conversion at the end of the catalyst bed is smaller but close to 100%.

### Description of the preferred embodiments

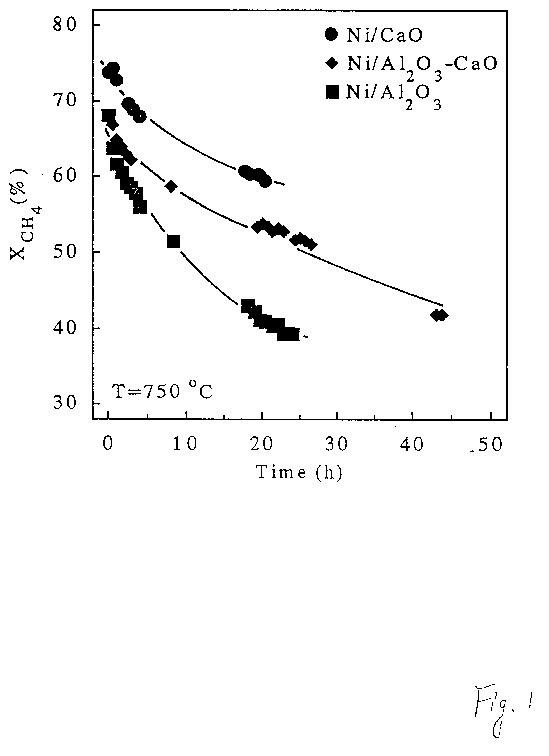

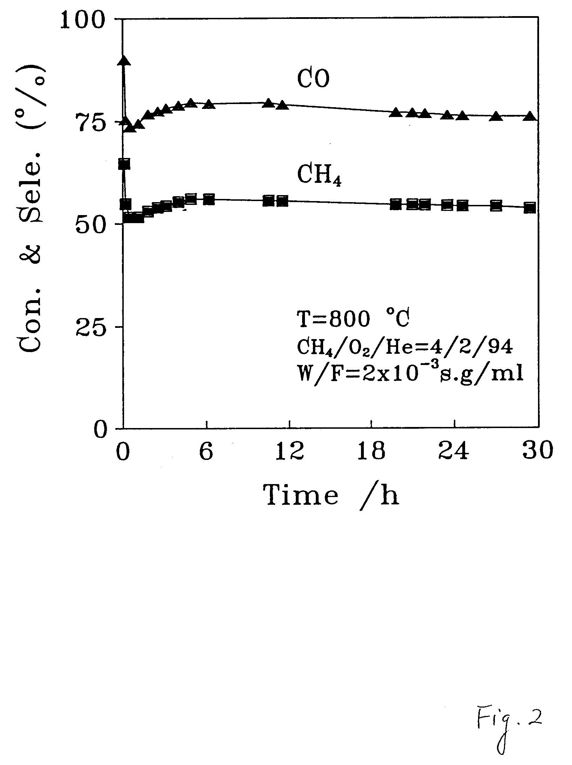

High conversion and selectivity to synthesis gas from the CH₄/O₂ mixtures have been obtained over a number of nickel-based catalysts including those commonly used in the steam reforming process [7, 8]. The major problem faced by Ni-based catalysts is rapid deactivation by coke formation. In the present invention, a novel nickel-based catalyst (i.e. Ni/La₂O₃) which exhibits excellent activity and stability for catalytic partial oxidation of light hydrocarbons, preferably natural gas, to synthesis gas is described. The catalyst can be prepared by the wet-impregnation method, using Ni(NO₃)₂ as the metal precursor, as well as by any other methods. The long-term stability of the Ni/La₂O₃ catalyst is compared with that obtained over the conventional nickel-based catalysts, i.e. Ni/γ-Al₂O₃, Ni/CaO/γ-Al₂O₃ and Ni/CaO. Fig. 1 shows the alteration of methane conversion as a function of time on stream over Ni/γ-Al₂O₃, Ni/CaO/γ-Al₂O₃ and Ni/CaO catalysts at 750^{o}C, CH₄/O₂ = 2, 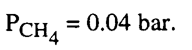 The Ni loading is invariably 17 wt.%, while the contact time is adjusted so that the initial conversions are approximately the same and are somewhat lower than those expected at thermodynamic equilibrium at 750^{o}C. It is observed that all three Ni-based catalysts deactivate rapidly with increasing reaction time. The deactivation rate follows the order: Ni/γ-Al₂O₃ > Ni/CaO/γ-Al₂O₃ > Ni/CaO. These results are in agreement with previous studies [7, 8] which reveal that Ni-based catalysts are prone to carbon deposition. In sharp contrast to the aforementioned conventional Ni-based catalysts, the Ni/La₂O₃ catalyst exhibits uniquely stable performance towards synthesis gas formation from partial oxidation of methane. Fig. 2 shows the alteration of methane conversion and CO selectivity, obtained at 800^{o}C over the Ni/La₂O₃ catalyst, as a function of time on stream, using a heavily diluted reaction mixture, CH₄/O₂/He = 4/2/94 vol.%. It is observed that a rapid drop in methane conversion and CO selectivity occurs during the initial period of reaction, which lasts for about 1∼2h. Following this period, both methane conversion and CO selectivity tend to be essentially constant during 30h of reaction. Higher conversion of methane and higher selectivity to synthesis gas can be obtained either by increasing contact time of the reaction or by increasing reaction temperature.

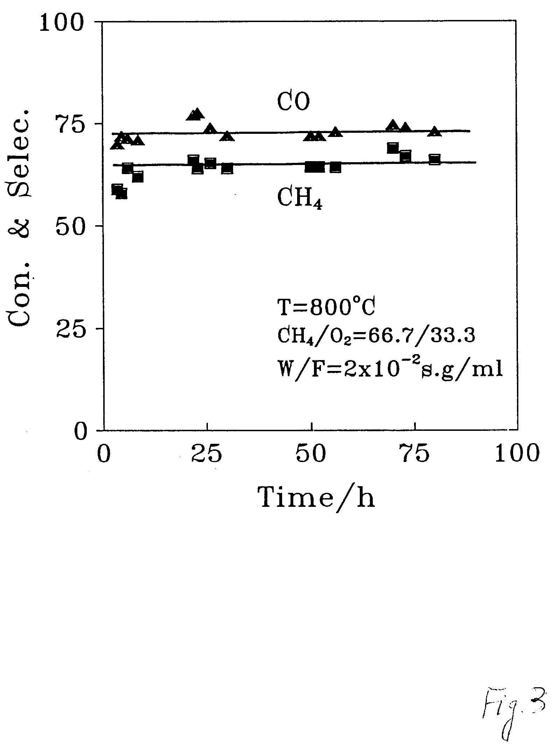

The superiority of the Ni/La₂O₃ catalyst in stable performance, as compared to that of conventional Ni-based catalysts, has been demonstrated (Figs. 1 and 2). As an even more critical test of the resistance of the Ni/La₂O₃ catalyst to coke formation, the catalyst is exposed to the reaction mixture (of the stoichiometric ratio i.e. CH₄/O₂ = 2) without any gaseous dilution, and its catalytic stability is tested at 800^{o}C for a prolonged period of time. It is shown in Figure 3 that the Ni/La₂O₃ catalyst exhibits excellent stability, showing no deactivation during 100h of testing. This result clearly demonstrates that the present Ni/La₂O₃ catalyst is more resistant towards coke formation than the conventional nickel-based catalysts during partial oxidation of methane, even under the stoichiometric feed ratio. The Ni/La₂O₃ catalyst is also found to exhibit high flexibility towards producing synthesis gas with various H₂/CO ratios. As shown in Table 1, the H₂/CO ratio can be easily altered, at least in the range from 0.9 to 2.2, by adjusting the feed composition (CH₄, O₂, CO₂, H₂O). This permits the Ni/La₂O₃ catalyst to be employed in the process for producing synthesis gas which is suitable for manufacture of H₂, NH₃, methanol, fuels, etc., depending upon the cost and availability of feed components (O₂, CO₂, H₂O), and depending upon the quality of synthesis gas demanded.

The present invention describes a new catalyst whose main advantages and differences from the noble metal catalysts and conventional nickel-based catalysts are the following:
**1.** The catalysts containing noble metals have been reported to be less prone to coking than nickel-based catalysts [7-11]. However, from the industrial standpoint, the high cost and limited availability (particularly for Rh metal) make noble metal-containing catalysts less attractive, as compared to the present nickel-based catalyst.
**2.** Conventional nickel-based catalysts have been reported to deactivate rapidly with time on stream [7, 8, 21] especially when the stoichiometric feed ratio (i.e. CH₄/O₂=2) is used. This tendency is also verified in the present study for Ni/γ-Al₂O₃, Ni/CaO/γ-Al₂O₃ and Ni/CaO catalysts (see Fig. 1). However, no deactivation is observed over the present Ni/La₂O₃ catalyst using the stoichiometric feed ratio with or without gaseous dilution (see Figs. 2 and 3).
**3.** The steam reforming process which is currently applied in industry produces a synthesis gas with H₂ to CO ratios of ≧3, which are undesirable for production of methanol and synthetic fuels. Also, it requires a reaction feed with steam to CH₄ ratio of 3.0∼3.5 in order to suppress coke formation on the catalysts (typically alkali- or alkaline-promoted Ni/Al₂O₃) [20]. Addition of CO₂ favors reduction of the amounts of steam added in the feed and decreases the H₂/CO ratio of the products [5,6]. The amounts of the oxidant (i.e. CO₂ and H₂O) added is, however, too high, as compared to that required for the present Ni/La₂O₃ catalyst under analogous conditions (see Table 1).
**4.** Strong basic oxides, such as alkali and alkaline earth oxides, have been frequently applied as promoters of the nickel-based catalysts in order to reduce coke formation [20]. This, however, usually results in a significant reduction of catalytic activity. The present Ni/La₂O₃ catalyst contains no strong basic component and it gives a stable operation with good activity (Figs. 2 and 3).
**5.** A Ni-based catalyst which had been partly sulfided has been proposed for the CO₂ reforming process. The presence of sulfur on the surface is designed to block the sites for carbon formation. This process, called the SPARG process, allows carrying out the reforming reaction with reduced amounts of oxidants (i.e. CO₂ and H₂O) [22,23]. The same quality of synthesis gas (i.e. H₂/CO ratio) can be obtained over the present Ni/La₂O₃ catalyst using similar reaction feed (Table 1, test D). For the present Ni/La₂O₃ catalyst, the sulfidation step is avoided and no reduction of activity by blocking of nickel sites with sulfur is required.
**6.** The autothermal reforming process [5,24] is capable of producing synthesis gas with low H₂ to CO ratios, e.g. H₂/CO=1.19 from a feed of H₂O/C=0.69, CO₂/C=0.78 and O₂/C=0.73; or H₂/CO=0.99 from a feed of H₂/C=0.60, CO₂/C=1.01 and O₂/C=0.75. The similar quality of synthesis gas (i.e. H₂/CO=1.1) can, however, be obtained over the present Ni/La₂O₃ catalyst using less amounts of oxidant, i.e. O₂/CH₄=0.50, CO₂/CH₄=1.00 (see Table 1, test C).

In another embodiment of the invention, a Ru/TiO₂ catalyst which exhibits unique performance, being capable of converting light hydrocarbons, preferably natural gas, to synthesis gas, via the direct partial oxidation scheme (i.e. without or with negligible involvement of reforming steps), is described. The Ru/TiO₂ catalyst consists of 0.01∼40 wt.%, preferably 0.1-10 wt.% Ru on a carrier of TiO₂, optionally doped with an oxide, e.g. ZnO. The catalyst can be prepared by the wet-impregnation method, using Ru(NO₃)₃ as the metal precursor, as well as by any other methods. Upon employing the Ru/TiO₂ catalyst, up to 50-60% of methane in the feed stream (using a feed of O₂/CH₄=0.5) is converted, at selectivity to synthesis gas of 60∼80% and at oxygen conversion of 90-99%. The Ru/TiO₂ catalyst exhibits a unique performance, i.e. the partial oxidation of methane follows the direct reaction scheme. The remaining of unconverted methane (40-50%) in the feed can be further completely converted to synthesis gas over the Ru/TiO₂, or Ni/La₂O₃, or other reforming catalyst, through subsequent reforming reactions. It could also be the case that all the methane in the feed is fully converted to synthesis gas over the Ru/TiO₂ catalyst, via the direct partial oxidation scheme, by feeding additional amount of oxygen. Such processes are more cost-efficient than the conventional steam reforming and autothermal reforming since the whole process can be easily completed within a single process train without need of any external fired heaters or a separate internal combustion chamber. The temperature profile along the catalyst bed is more uniform due to the high selectivity of the direct partial oxidation route, thus permitting to reduce the risks of CH₄/O₂ explosion, retard catalyst sintering especially at the entrance of the reactor, lengthening th lifetime of reactor materials, and favoring the adiabatic operation.

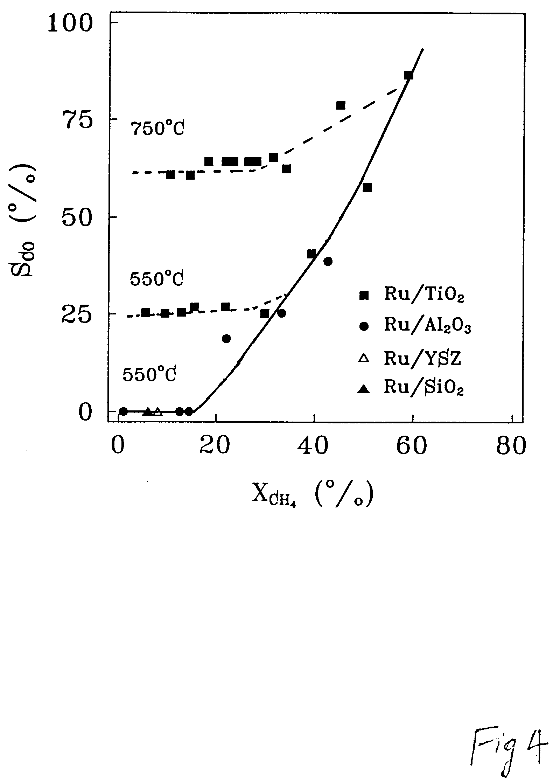

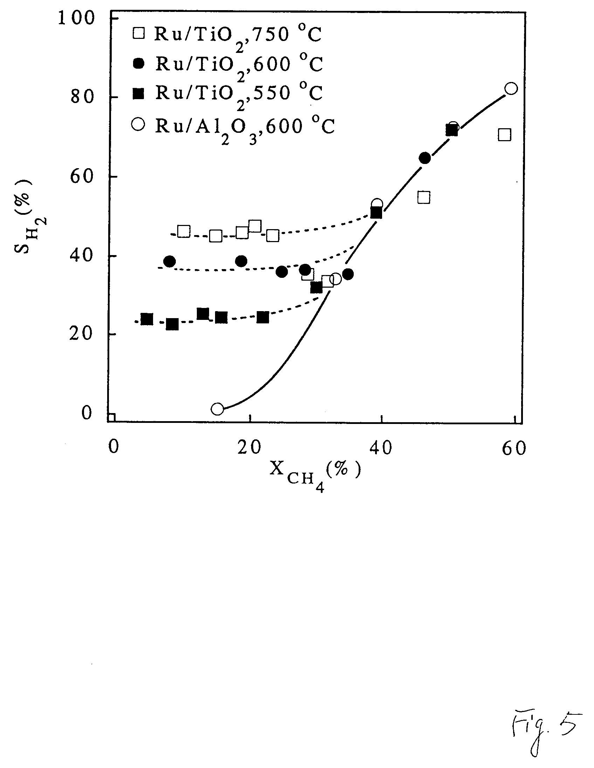

Detail studies were carried out for assessing the intrinsic differences between the present Ru/TiO₂ and other conventional catalysts. It is found that the Ru/TiO₂ catalyst is the only one among many catalysts tested which offers the direct partial oxidation scheme to synthesis gas. All other catalysts, including Ni-, Rh-, Pd- and Ir- based catalysts, provide the indirect reaction scheme, i.e. the sequence of total oxidation, followed by reforming reactions. It is shown in Fig. 4 that while CO selectivity obtained over other catalysts at low methane conversions is negligibly small, significantly high CO selectivity is obtained over the Ru/TiO₂ catalyst at low methane conversions. The value of CO selectivity is almost constant, at methane conversions approaching zero. This suggests that CO is formed as a primary product, not as secondary product from CO₂ reforming. Increasing reaction temperature from 550 to 750^{o}C results in a sharp increase in CO selectivity from ca. 25 to 65% over the Ru/TiO₂ catalyst at the low methane conversion region, indicating that higher temperature is favorable for direct CO formation. When H₂ selectivity is plotted versus methane conversion (Fig. 5), approximately the same pattern is observed, i.e. negligible H₂ selectivity over the other catalysts at low methane conversions, whereas significantly high H₂ selectivity is obtained over the Ru/TiO₂ catalyst. The H₂ selectivity is also increased with increasing reaction temperature. It can be concluded from Figs. 4 and 5 that synthesis gas (CO+H₂) is primarily formed over the Ru/TiO₂ catalyst through the direct partial oxidation scheme in the low methane conversion region.

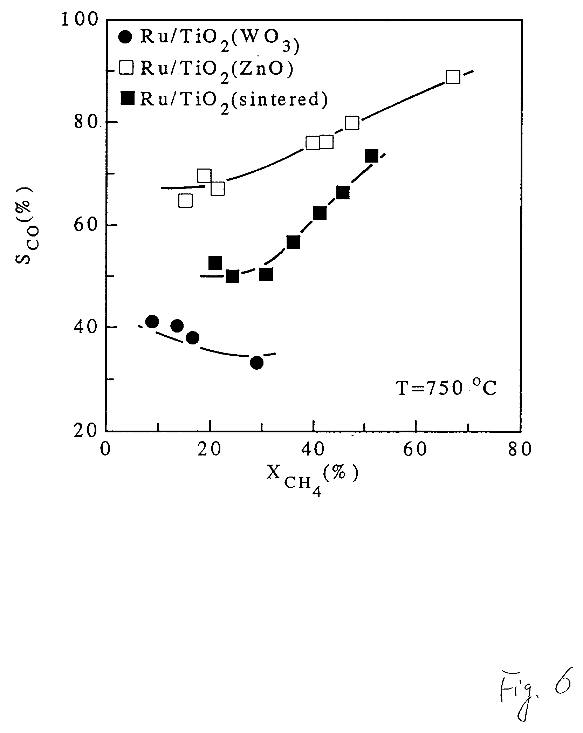

The direct partial oxidation of methane to synthesis gas is attributed to some kind of interaction between Ru and TiO₂. This interaction can possibly be changed by modification of the TiO₂ support. Figure 6 shows how the modification of the TiO₂ support affects selectivity to CO formation. At low methane conversion, a CO selectivity of ca 58% is obtained over the Ru/TiO₂ (rutile) catalyst. Doping TiO₂ with small amounts of WO₃ (≦ 0.11 at.%) adversely affects the CO selectivity, resulting in a CO selectivity of ca. 40% at low methane conversion. However, an increase in CO selectivity from ca 58 to ca 70% at low methane conversions is obtained by doping TiO₂ with small amounts of ZnO (≦ 0.11 at.%). It appears that increasing the p-type and/or decreasing of n-type conductivity of TiO₂ by doping with lower valence cations (Zn²⁺) favors the electronic interaction between Ru crystallites and TiO₂ support in the direction of suppressing total oxidation of CO to CO₂; whereas the opposite trend is true by doping TiO₂ with higher valence cations (W⁶⁺) [2,25].

It was also found that CO selectivity in the low methane conversion region (when oxygen conversion is < 100%) is significantly increased from ca 63% to ca 85% when the feed CH₄/O₂ ratio is increased from the stoichiometric value of 2 to 6.5. This means that splitting the feed of oxygen along the catalyst bed, which results in the catalyst exposed to mixtures of higher CH₄/O₂ ratios, favors to attenuate oxidation of methane to CO₂. As long as the reactions between oxygen and CO and/or H₂ are significantly suppressed, the selectivity to synthesis gas (when oxygen conversion is < 100%) is improved by splitting the feed of oxygen along the catalyst bed. Table 2 gives a comparison between the results obtained with the Ru/TiO₂ catalyst with a single and dual feed of oxygen. The total amount of oxygen fed through the two feed points is equal to that of the single feed. By making the oxygen accessible to all the catalyst sites along the catalyst bed (although the concentration of oxygen along the catalyst bed differs), the reforming reactions are suppressed. It is shown in Table 2 that the split-feed of oxygen indeed improves selectivity to CO, as compared to the single feed of oxygen. It is envisaged that a further improvement in selectivity to synthesis gas formed via the direct partial oxidation scheme is expected when the same amounts of oxygen are fed from more than two feeding points. This would lead to flattening the temperature profile along the catalyst bed, reducing the risks of wearing of reactor materials, and catalyst sintering due to high temperatures at the entrance section of the catalyst bed. Moreover, the split-feed of oxygen in the process of partial oxidation of methane to synthesis gas is of importance in reducing the risk of CH₄/O₂ explosion, particularly when operating at high temperatures and high pressures.

The Ru/TiO₂ catalyst described above can be used in any desired reactor or process configuration to produce synthesis gas from natural gas in either a single step or a dual step process, as discussed above. In the form of examples, two existing processes in which the Ru/TiO₂ catalyst can be used, are described:
a) The steam reforming process for ammonia manufacture consists of a secondary reformer to which the required amount of air is introduced for obtaining N₂ and for converting as much methane as possible to carbon dioxide and hydrogen. However, introduction of air into the process produces the highly exothermic reaction between oxygen and hydrogen, which requires the endothermic steam reforming reaction in order to compensate the loss of hydrogen to water [20]. Poor mixing of the gases from a badly designed or faulty burner can result in local temperatures higher than 1000^{o}C. Such temperatures can fuse the catalyst, causing moldistribution of gas and a high pressure drop [20]. By employing the present Ru/TiO₂ catalysts in the secondary reforming section, the gas phase reactions between CO, H₂ and oxygen (could be in the form of air) are suppressed since only short contact times are needed over the highly active Ru/TiO₂ catalyst. Much more methane can be converted in this section since oxygen is efficiently utilized for the formation of CO and H₂ instead of formation of CO₂ and H₂O. Furthermore, the problem of temperature run-away is absent since the direct partial oxidation of methane to synthesis gas only produces small quantities of heat.
b) The process of autothermal reforming of methane to synthesis gas combines partial oxidation and subsequent adiabatic-steam reforming. The partial oxidation step is completed in a separate combustion chamber [24]. Since the temperature in this zone exceeds 2000^{o}C, severe burner damage will result unless advanced alloy materials and improved design are realized. Also, a significant amount of soot formation may be expected in this section since substoichiometric combustion always involves the risk of incomplete combustion with the formation of soot, soot precursors, and high molecular weight hydrocarbons. For the catalytic partial oxidation process, when employing the present Ru/TiO₂ catalyst in the first part of the catalyst bed, up to 50-60% of methane in the feed (O₂/CH₄ = 0.5) can be effectively converted to synthesis gas via the direct partial oxidation scheme. This will significantly reduce the load of the subsequent reforming section. Such a process is more cost-efficient than the conventional steam reforming and autothermal reforming since it has a better heat recovery and the whole process can be readily completed in a simple fixed-bed reactor without need of any externally fired heaters or a separate internal combustion chamber. The temperature change along the catalyst bed is significantly reduced, thus reducing risks of catalyst sintering and CH₄/O₂ explosion, favoring the adiabatic operation, and lengthening lifetime of reactor materials.

Having described the basic aspects of the present invention of the Ni/La₂O₃ and Ru/TiO₂ catalysts, the following examples are given to illustrate specific embodiments thereof.

### Example 1

This example illustrates the stable performance of partial oxidation of methane to synthesis gas over a 17 wt.% Ni/La₂O₃ using CO₂/CH₄ = 1, 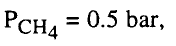 Pₜₒₜ= 1.0 bar, T=800^{o}C, m_{cat}=30 mg. As shown in Figure 3, no deactivation in methane conversion or reduction in CO selectivity are observed during 100h of testing, displaying excellent stability. The H₂/CO ratios in the product mixtures are close to 2.0. As reaction temperature is increased and/or more O₂ or CO₂ or H₂O is fed, the stable performance can be sustainable at elevated pressures. Since the Ni/La₂O₃ catalyst shows more resistance to coke formation than the conventional nickel-based catalysts (see Figs. 1 and 2), the process over the Ni/La₂O₃ can tolerate the reaction feed with less amounts of oxidant (O₂ or CO₂ or H₂O) than the respective one over the conventional nickel-based catalysts, thus allowing the process over the Ni/La₂O₃ to be more cost-efficient.

### Example 2

This example illustrates the flexibility of the Ni/La₂O₃ catalyst in producing synthesis gas with a wide range of H₂/CO ratios, using the reaction mixtures containing various proportions of O₂, H₂O and CO₂. The H₂/CO ratio produced from the CH₄/O₂ (=2) feed amounts to ca. 2.0. However, its value is reduced, approaching 1.0 when significant amounts of CO₂ are added (see Table 1). The synthesis gas with H₂/CO ratios of 1.0∼2.0 is suitable for many chemical processes like methanol production and liquid fuels synthesis. As could be expected, a synthesis gas with higher H₂/CO ratios (e.g. H₂/CO close to 3.0) can be obtained when significant amounts of steam are cofed. In this case, the product mixture is suitable for processes like H₂ or NH₃ manufacture. What makes the Ni/La₂O₃ catalyst different from the conventional nickel-based catalysts is its better tolerability towards coke formation, which allows the process to have a stable performance at industrial conditions, using less amounts of "oxidants" (i.e. O₂, H₂O or CO₂).

### Example 3

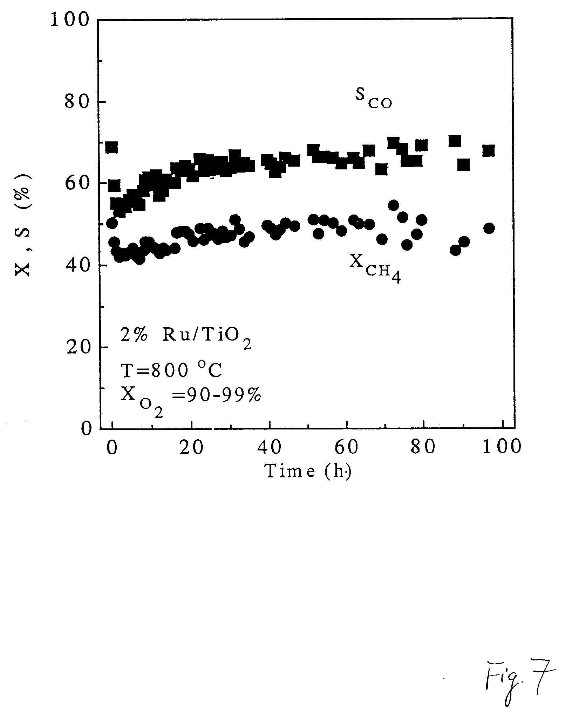

This example illustrates the stability of a 2 wt.% Ru/TiO₂ catalyst operating at 800^{o}C, CH₄/O₂=2, 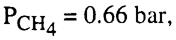 Pₜₒₜ = 1.0 bar. The contact time is adjusted in order that the oxygen conversion at the end of the catalyst bed is less than but close to 100%. It is shown (Fig. 7) that methane conversion of 45∼50% with synthesis gas selectivity of 65∼70% are achieved. The catalyst exhibits excellent stability, showing no deactivation during 100h of testing. Since the overall catalyst bed is exposed to oxygen, and since the short contact time is applied, the contribution to synthesis gas from reforming reactions is small, while the synthesis gas is dominantly produced by direct partial oxidation scheme. If more oxygen is fed via, for example, the manner of split oxygen feed, the remaining unconverted methane can be completely converted to synthesis gas. Although the newly-fed oxygen may partly react with the CO and H₂, already produced, to form H₂O and CO₂, the extent of such deep oxidations should not be significant since the contact time applied is short and the Ru/TiO₂ catalyst itself suppresses the deep oxidation. In this way, a synthesis gas with methane conversion of 100% can be obtained through the direct partial oxidation scheme. The side products, water and CO₂, can be used in the down-stream chemical processes such as water-gas shift reaction, CO₂ hydrogenation, or urine manufacture from reaction between CO₂ and NH₃.

### Example 4

This example illustrates a dual-bed process which completely converts methane to synthesis gas over the Ru/TiO₂ catalyst or over a catalyst bed consisting of the Ru/TiO₂ and a conventional reforming catalyst. As shown in Fig. 7, up to 45-50% of methane in the feed (O₂/CH₄ = 0.5) can be converted over the Ru/TiO₂ catalyst in the first bed to synthesis gas with selectivity of ∼70%, through the direct partial oxidation reaction (the reforming reactions are negligible). Since there are still significant amounts of H₂O and CO₂ formed, the remaining unconverted methane can be further completely converted by the subsequent reforming with these amounts of H₂O and CO₂ by contacting with the catalyst in the second catalyst bed which could be Ru/TiO₂ catalyst or Ni/La₂O₃ or other conventional reforming catalyst. The load of the reforming catalyst is significantly reduced since a large fraction of methane (45-50%) is already converted by the direct partial oxidation reaction over the Ru/TiO₂ catalyst in the first catalyst bed. Also, the large temperature spike occurring at the entrance of the catalyst bed is effectively removed due to less amounts of heat produced by the direct partial oxidation reaction. In case that coke is formed on the reforming catalyst in the second catalyst bed, more oxidant (O₂, H₂O or CO₂) should be fed in order to obtain the stable performance. By employing the present novel Ni/La₂O₃ catalyst in the second catalyst bed, less amounts of the oxidant is required, thus reducing the overall cost of the process.

### Example 5

This example illustrates the improvement of selectivity to synthesis gas when TiO₂ is mixed or doped with metal oxides such as, for example, ZnO, CaO, Li₂O, BaO, and La₂O₃. When an undiluted CH₄/O₂ (=2) feed mixture is fed in the reactor and the catalyst employed is Ru dispersed on TiO₂ doped or mixed with ZnO, CaO, BaO, or Li₂O, the resulting CO selectivity at low methane conversions is increased from ca 70 to 80-85%. In this case, methane conversion in the presence of oxygen in the reaction mixture is ca 60-70%. A significant enhancement in H₂ selectivity is observed when the catalyst consists of Ru dispersed on TiO₂ doped or mixed with La₂O₃ or BaO. In this case H₂ selectivity close to 100% is obtained at methane conversions less than 30%.

### Literature Cited

1. D.L.Trimm, Catal. Rev. -Sci. Eng. 16 (1977) 155.
2. Z.L. Zhang, X.E. Verykios and M. Baerns, Catal. Rev. -Sci. Eng. 36 (1994) 507.
3. J.R. Rostrup-Nielsen, "Catalytic Steam Reforming", Catalysis, Science and Technology, J.R. Anderson and M. Boudart, Eds., Vol.5, Springer, Berlin, 1984, p.1.
4. Idemitsu Kosan Co. Ltd. European Patent, Appl. No. 406,896A; and Tokyo Gas K.K., Japanese Patent Appl. No. 63/248,444
5. T.S. Christensen and I.I. Primdahl, Hydrocarbon Processes, March 1994, p. 39.
6. J.R. Rostrup-Nielsen, Natural Gas Conversion II, H.E. Curry-Hyde, R.F. Howe (editors), Elsevier Science B.V., 1994, p25.
7. M. Prettre, C. Eichner, and M. Perrin, Trans. Faraday Soc. 43 (1946) 335.
8. D. Dissanayake, M.P. Rosynek, K.C.C. Kharas, and J.H. Lunsford, J. Catal. 132 (1991) 117.
9. D.A. Hickman, E.A. Haupfear and L.D. Schmidt, Catal. Lett. 17 (1993) 223.
10. Y. Boucouvalas, Z.L. Zhang and X.E. Verykios, Catal. Lett. 27 (1994) 131.
11. A.T. Ashcroft, A.K. Cheetham, J.S. Foord, M.L.H. Green, C.P. Grey, A.J. Murrell, and P.D.F. Vernon, Nature 344 (1990) 319.
12. Y. Matsumura and J.B. Moffat, Catal. Lett. 24 (1994) 59.
13. P.M. Torniainen, X. Chu and L.D. Schmidt, J. Catal. 146 (1994) 1.
14. D.H. Hickman and L.D. Schmidt, J. Catal. 138 (1992) 267.
15. V.R. Choudhary, A.M. Rajput, and V.H. Rane, J. Phys. Chem. 96 (1992) 8686.
16. V.R. Choudhary, A.M. Rajput, and V.H. Rane, Catal. Lett. 16 (1992) 269.
17. V.R. Choudhary, A.M. Rajput, and B. Prabhakar, J. Catal. 139 (1993) 326.
18. D. Dissanayake, M.P. Rosynek, and J.H. Lunsford, J. Phys. Chem. 97 (1993) 3644.
19. J.R. Rostrup-Nielsen, Catal. Today, 18 (1993) 305.
20. D.E. Ridler and M.V. Twigg, Catalyst Handbook, Second Edition, M.V. Twigg, editor, Wolfe Publishing Ltd. 1989, p. 225.
21. A. Slagtern and U. Olsbye, Appl. Catal. A. General, 110 (1994) 99.
22. H.C. Dibbern, P. Olesen, J.R. Rostrup-Nielsen, P.B. Toettrup, Hydrocarbon Process 65 (1986) 71.
23. J.A. Stal, D.C. Hanson, J.-H. Bak Hansen, and N.R. Udengaard, Oil & Gas J. 90 (1992) 62.
24. I.I. Primdahl and T.S. Christensen, abstracts AIDIC Conf. "Chemical and Process Engineering", Firenze, May 1993.
25. T. Ioannides, X.E. Verykios, M. Tsapatsis and C. Economou, J. Catal. 145 (1994) 491.

**Table 1**

| Partial oxidation of methane to synthesis gas over a 17 wt% Ni/La₂O₃ catalyst. | | | | |
|---|---|---|---|---|
| Test | A | B | C | D |
| Feed Ratios (mol/mol) | | | | |
| O₂/CH₄ | 0.50 | 0.25 | 0.50 | 0 |
| CO₂/CH₄ | 0 | 1.00 | 1.00 | 1.67 |
| H₂O/CH₄ | 0 | 0 | 0 | 0.67 |

| Product Gas* | | | | |
|---|---|---|---|---|
| Temperature (^{o}C) | 800 | 800 | 800 | 800 |
| Pressure (bar) | 1.0 | 1.0 | 5.0 | 5.0 |
| H₂/CO (mol/mol) | 2.2 | 0.9 | 1.1 | 1.2 |
| CH₄ (dry mol%) | 16.8 | 6.6 | 7.4 | 7.0 |

| | | | | |
|---|---|---|---|---|
| * The conversion is deliberately controlled to be somewhat lower than that defined by thermodynamic equilibrium in order to easily monitor any catalyst deactivation. The data given are from the stable operation. The concentration of CH₄ in the product gas can be significantly reduced by increasing contact time and/or reaction temperature. | | | | |

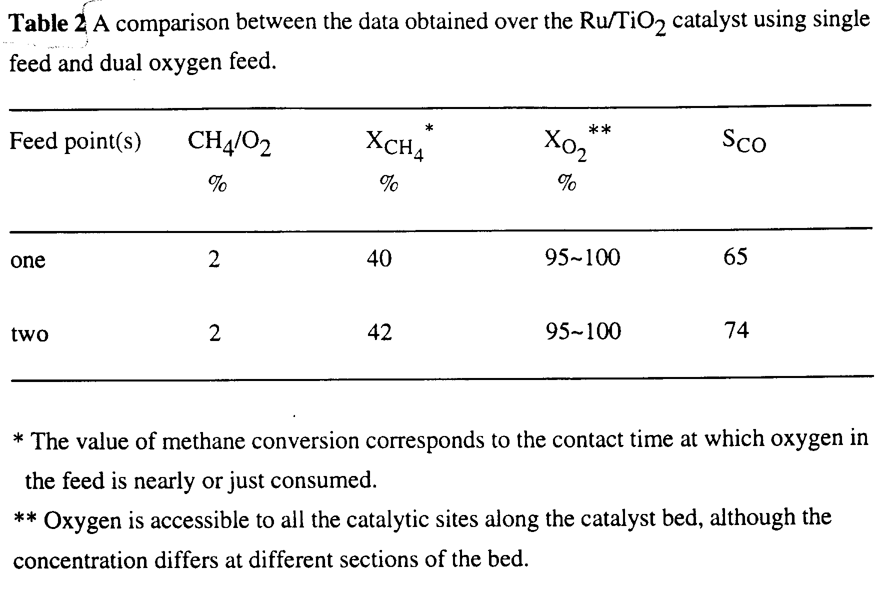

## Claims

It is understood that the foregoing detailed description is given merely by way of illustration and that many variation may be made therein without departing from the spirit of this invention.

1. Catalysts for the partial oxidation of light hydrocarbons, preferably natural gas, to synthesis gas (CO + H₂), in the presence or absence of steam and/or carbon dioxide consisting of a) nickel in contact with La₂O₃ or more than one of the following compounds: NiO, La₂O₂CO₃, La₂(CO₃)₃, NiCO₃, NiLa₂O₄, LaNi₅, LaNiO₃, La₂NiO₄, nickel carbide, all of which are possibly formed from Ni/La₂O₃ pairs under the working reaction conditions. b) Ruthenium in contact with TiO₂ or a ruthenium-containing compound in contact with a titanium-containing compound.

2. Catalysts as in claim 1 where nickel nitrate or other nickel compound, e.g. nickel oxide, nickel carbonate, nickel chloride, etc., is used as nickel metal precursor for catalyst (a), while ruthenium nitrate or other ruthenium compound, e.g. ruthenium oxide, ruthenium carbonate, ruthenium chloride, etc. is used as ruthenium precursor for catalyst (b).

3. Catalysts as in claims 1 and 2 where La₂O₃ is used as a support or where the lanthanum compound other than La₂O₃ e.g. lanthanum nitrate, lanthanum hydroxide, lanthanum carbonate, lanthanum oxycarbonate (La₂O₂CO₃), etc., is used as the support precursor for catalyst (a), while TiO₂ in the form of anatase or rutile, is used as the support, or where TiO₂ is doped with cations of valence lower or higher than +4, preferably CaO, ZnO, BaO, Li₂O and La₂O₃ or other type of materials containing or not containing titanium element is used as the support for catalyst (b).

4. A catalyst as in claims 1, 2, and 3 where nickel on La₂O₃ or ruthenium on TiO₂ are dispersed on a conventional carrier such as γ-Al₂O₃, α-Al₂O₃, SiO₂, MgO, etc.

5. A method for preparation of the catalysts as in claims 1, 2, 3 and 4 consisting of wet-impregnation technique or other preparation technique which results in (a) catalyst containing nickel crystallites and La₂O₃ or any other compounds which can be originated from nickel and lanthanum elements, (b) catalyst containing ruthenium crystallites and TiO₂, or any other compounds which can be originated from ruthenium and titanium elements.

6. Catalysts as in claims 1-5 for the process of partial oxidation of light hydrocarbons, preferably natural gas,to synthesis gas, where oxidant, in the form of pure oxygen, oxygen enriched air, or air, could be supplied into the reactor through the ways of single feed or split-feed with oxygen amounts equalling to O₂/CH₄ = 0.5∼1.5, and where the reaction temperature is higher than 500^{o}C, and pressure is in the range of 1∼70 bar, preferably 1-30 bar.

7. Catalysts for the process as in claim 6, where steam and/or CO₂ is cofed with CH₄/O₂ mixture.

8. Catalysts for a dual-bed process combining the process as claims 6 and/or 7 used in the first part, and the conventional reforming process used in the second part. Significant amounts of hydrocarbons, preferably natural gas, in the feed is converted to synthesis gas in the first part of the catalyst bed, while the remaining unconverted methane is further completely converted to synthesis gas in the second part of the catalyst bed via the reforming reactions with steam and/or CO₂.

9. Catalysts for a process as described in claim 8 which uses the Ru/TiO₂ catalyst for the first part of the partial oxidation process and the Ni/La₂O₃ catalyst or other conventional reforming catalyst(s) for the second part of the process for converting the unconverted methane in the mixture to synthesis gas.
